# EUROPEAN PATENT SPECIFICATION

(11) **EP 2 790 492 B1**
(45) Date of publication and mention of the grant of the patent: **06.04.2016**
(21) Application number: 12813141.4
(22) Date of filing: 14.12.2012
(51) Int. Cl.: A01J 11/10, A23C 3/02, A23C 7/04, A23C 9/142

(54) **METHOD FOR PRODUCING MILK**
VERFAHREN ZUR HERSTELLUNG VON MILCH
PROCÉDÉ POUR PRODUIRE DU LAIT

(30) Priority: 15.12.2011 EP 11193813
(43) Date of publication of application: 22.10.2014
(73) Proprietor: Tine SA, 0191 Oslo (NO)
(72) Inventor: TOM, Hoffmann, N-1550 Hølen (NO)
(74) Representative: Zacco Norway AS
(86) International application number: PCT/NO2012/050248
(87) International publication number: WO 2013/089563

(56) References cited:
- WO-A1-2008/058844
- WO-A2-2010/085957
- US-A- 5 683 733
- Anonymous: "Trinkmilchtechnologien", , 1 January 2009 (2009-01-01), pages 1-35, XP002676372, Retrieved from the Internet: URL:http://www.agroscope.admin.ch/data/pub likationen/1286870397_af79_d_web.pdf [retrieved on 2012-05-22]
- TULEY L: "HIGH TECH COMES TO FILTRATION", FOOD MANUFACTURE, WILLIAM REED PUBLISHING, LONDON, GB, vol. 63, no. 6, 1 June 1988 (1988-06-01), page 45,47, XP000578331, ISSN: 0015-6477
- BORGSTROM U: "Norwegian cheese plant pilots Bactocatch", CHILTON'S FOOD ENGINEERING, B N P MEDIA, US, vol. 63, no. 2, 1 January 1991 (1991-01-01), page 30,33, XP009159443, ISSN: 0193-323X

## Description

### FIELD OF THE INVENTION

The present invention relates to a method for producing milk. A milk processing plant for implementation of the method is described.

### BACKRGOUND OF THE INVENTION

On the market there are today a number of milk products with different fat content packed in packages. In Norway there is for example minimum milk 0.1 % fat, extra light milk 0.7 % fat, light milk 1.5 % fat and "standard" milk 3.9 % fat. Abroad there are products with other fat contents. The fat content given on the packages must be kept and production of milk with a certain, guaranteed fat content, usually called standardization of milk, is therefore an important process step in a dairy.

Fat standardized milk product may be packed in packages and sold as is or may be used as raw material in the production of other dairy products such as e.g. cheese.

The standardization process has hitherto been carried out according to two different methods, batch-wise in tanks or by direct in-line standardization. The first step according to both these methods is to separate whole milk into cream and skimmed milk.

When carrying through the standardization in batches two methods are used, namely pre-standardization and post-standardization. The pre-standardization means that the milk is standardized prior to the pasteurization. When the milk shall be standardized to a fat content higher than the fat content in the raw milk, cream is mixed with the milk in proportions which shall give the desired fat content. If the standardization shall take place to lower fat content, the raw milk is diluted with skimmed milk. The standardized milk is pasteurized after analysis of the fat content and a possible correction of the same.

Post-standardization means that pasteurized milk is mixed with cream or skimmed milk depending on if the fat content shall be adjusted upwards or downwards in the same way as practiced for the pre-standardization. Some risks for re-infection are present since post-standardization means mixing of already pasteurized products. Both methods demand large tanks and analysis and possible correction of the fat content is labor-intensive.

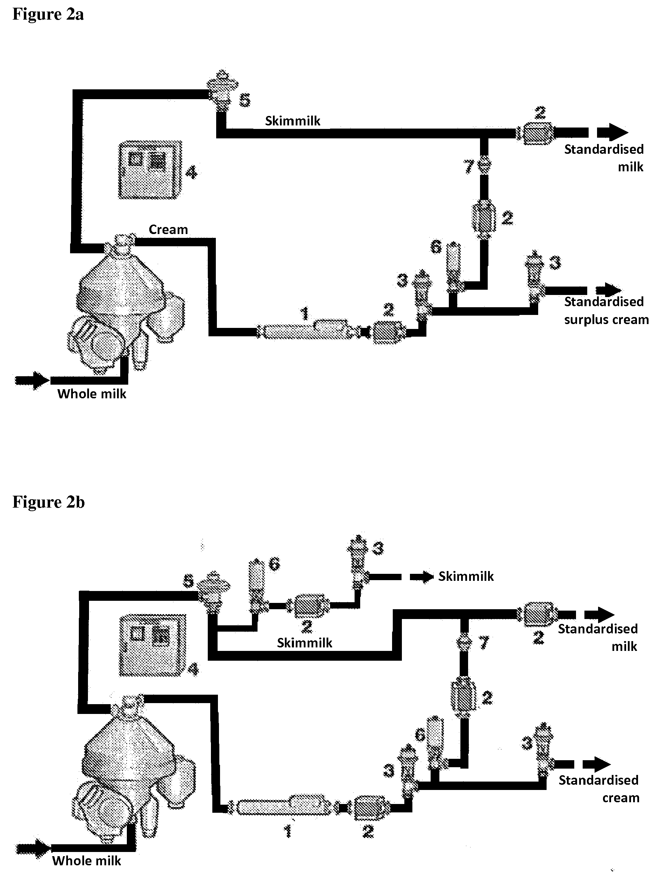

The second method, direct-standardization, has therefore been an attractive alternative for many years. According to this method the fat content is adjusted to the required level by remixing a certain amount of the cream obtained from the separator with skimmed milk also obtained from the centrifugal separator. This remixing usually takes place in the skimmed milk pipeline connected to the skimmed milk outlet from the centrifugal separator. As the flow and/or pressure within the processing plant may change during production, the prior art installations necessary to prepare fat standardized milk is quite complex (see figures 2a and 2b).

In order to reduce the number of viable microorganisms, the fat standardized milk that is obtained after the remixing of suitable amounts of cream and skimmed milk after passage of the centrifugal separator is subjected to pasteurization. There are three main types of pasteurization used today: High Temperature/Short Time (HTST), Ultra-high temperature (UHT or ultra-heat treated) and Extended Shelf Life (ESL) treatment.

In the HTST process, milk is typically forced between metal plates or through pipes heated on the outside by hot water, and is heated to a temperature of about 71.7 °C for about 15-20 seconds. Provided that the milk is heated evenly and that no part of the milk is subject to a shorter time or a lower temperature, the HTST pasteurization processes is believed to result in a 1-2 log reduction in the number of viable microorganisms in milk. This is considered adequate for destroying almost all yeasts, molds, and common spoilage bacteria and also to ensure adequate destruction of common pathogenic heat-resistant organisms.

Ultra high temperature (UHT) processing is well-known in the prior art as a continuous flow process, where the milk is heated in excess of 135 degrees C, held for approx. 4 sec, rapidly cooled, and aseptically packaged. UHT can involve using traditional heat exchangers to heat and cool the milk (indirect UHT) or direct mixing of milk and steam followed by cooling to remove the condensed steam (direct UHT).

When it comes to ESL milk, the milk has typically been subjected to a microbial-filtration step prior to pasteurization. The filtered milk is then subjected to pasteurization, typically at lower temperatures and for a shorter period of time as compared to the UHT process.

Pasteurization methods are usually controlled by national food safety agencies such as the USDA in the United States, the Food Standards Agency in the United Kingdom and the Norwegian Food Safety Authority in Norway.

If one or more pasteurization process parameters deviate from regulatory requirements during production, the non-satisfactory pasteurized milk product should be discarded or optionally re-pasteurized. In practice, it is common that the supply of standardized milk to the pasteurization device is temporarily stopped until the matter is solved and the non- satisfactory pasteurized milk product is discarded or recycled back to the initial processing step where the non-satisfactory pasteurized milk product is mixed with raw milk.

Temporarily shutdown of the supply of standardized milk to the pasteurization device results in costly production delays, and it cannot be excluded that it also will negatively affect the quality of the end product.

Mixing the non-satisfactory pasteurized milk product with the raw milk and subjecting the mixture to treatment on a separator and the consecutive processing steps may be of no big concern as long as the process line does not include some sort of membrane filtration equipment. However, recent years it has become more and more common to include one or more membrane filtration processing steps in the process line to remove water, microorganisms, lactose or for protein fractionation. As membrane filters are easily clogged by denaturized proteins, it is in practice not an option to recycle heat treated milk products to the initial processing step.

When the process is complete, the system is usually rinsed using water. The water present in the system at re-start causes significant dilution of the initial raw milk entering the system. Thus, it has become common practice that the product of the process after re-start is discarded until the water content of the product is sufficiently low. The latter is a virtue of necessity but results in significant loss of potential useful product.

US 5 683 733 describes a method to produce milk with a low content of bacteria wherein raw milk is first heated to a temperature of 45-65°C, then separated into cream and skim milk, the skim milk is then further microfiltrated to physically separate microorganisms. The cream is heat-treated and mixed with the filtrated skim milk in order to obtain standardized milk, and finally pasteurized.

In spite of the recent significant advances within this field of technology, there is still a continued need to find new features that simplifies and improves preparation of standardized milk, reduces the number of necessary temporarily shutdowns, reduces the negative consequences of necessary temporarily shutdowns and reduces the loss of potential useful product.

### SUMMARY OF THE INVENTION

An object of the invention is to provide a more cost effective method for producing milk, the increased cost efficiency being the result of prolonged operation time, less down time and minimization of the negative consequences of necessary temporarily shutdowns.

Another object of the present invention is to provide a simplified and improved method for producing standardized milk, such as e.g. fat standardized milk, lactose standardized milk and protein standardized milk.

Another object of the invention is to provide a method for producing milk which reduces the loss of potential useful product.

Thus, a first aspect of the present invention relates to a method for producing milk, said method comprising the following steps:
a) providing raw milk;
b) subjecting the raw milk to treatment on a bactofuge (c3, d3) and thereby physically separating microorganisms from the raw milk;
c) separating the raw milk of step b) into a cream fraction and a skimmed milk fraction (c4,d4);
d) subjecting the skimmed milk fraction to microfiltration (c5,d5) adapted to remove microorganisms and thereby obtain a partly sterilized skimmed milk fraction;
e) optionally, subjecting the partly sterilized skimmed milk fraction to membrane filtration (c6,d6) adapted to standardize said partly sterilized skimmed milk fraction;
f) transporting the product of step d) or e) to a balance tank for processed milk (c8,d8), wherein said balance tank for processed milk is adapted to balance or equalize any pressure or flow changes that may arise during the preceding processing steps; and
g) subjecting the product obtained by the preceding steps to pasteurization (c10,d10) in order to obtain a pasteurized milk;
wherein
- a microfiltration retentate (c5, d5) of step d) is mixed with the raw milk; or a bactofugate of step b) is mixed with the skimmed milk fraction of step c);
- step g) involves subjecting the product to a temperature in the range 65°C to 80°C;
   and
- the method does not include a step prior to step g) involving temperature treatment of the product at temperatures ≥ 65°C.

A milk processing plant for implementation of the method according to the first aspect of the present invention is described.

That is, a milk processing plant being suitable for practicing the said method is described, said plant comprising:
- optionally, a balance tank for raw milk (c1,d1);
- optionally, a heating device (c2,d2) adapted to heat raw milk to a temperature in the range 50-62 °C;
- a bactofuge (c3,d3) adapted to remove microorganisms from raw milk and a separator (c4, d4) adapted to separate raw milk into a cream fraction and a skimmed milk fraction; or a bactofuge-separator, wherein said bactofuge-separator is adapted to separate raw milk into a cream fraction, skimmed milk fraction and microorganism fraction;
- a microfiltration installation (c5, d5), wherein the microfiltration installation is adapted to remove microorganisms from said skimmed milk fraction and thereby obtain a partly sterilized skimmed milk fraction;
- a membranefiltration installation (c6, d6) adapted to standardize said partly sterilized skimmed milk fraction;
- optionally, a balance tank for cream fraction (c7,d7);
- a balance tank for processed milk (c8,d8), wherein said balance tank for processed milk is adapted to balance or equalize any pressure or flow changes that may arise during preceding processing steps;
- optionally, a homogenization device (c9,d9) adapted to form a constant of different insoluble phases to obtain a suspension or emulsion;
- a pasteurization device (c10,d10), wherein the pasteurization device is adapted to reduce the number of viable pathogens in accordance with regulatory provisions;
- optionally, a packaging section adapted for packaging the product of the milk processing plant;
- optionally, a cheese production process line for producing cheese.

Preferred embodiments of the present invention are set forth in the dependent claims.

### DESCRIPTION OF FIGURES

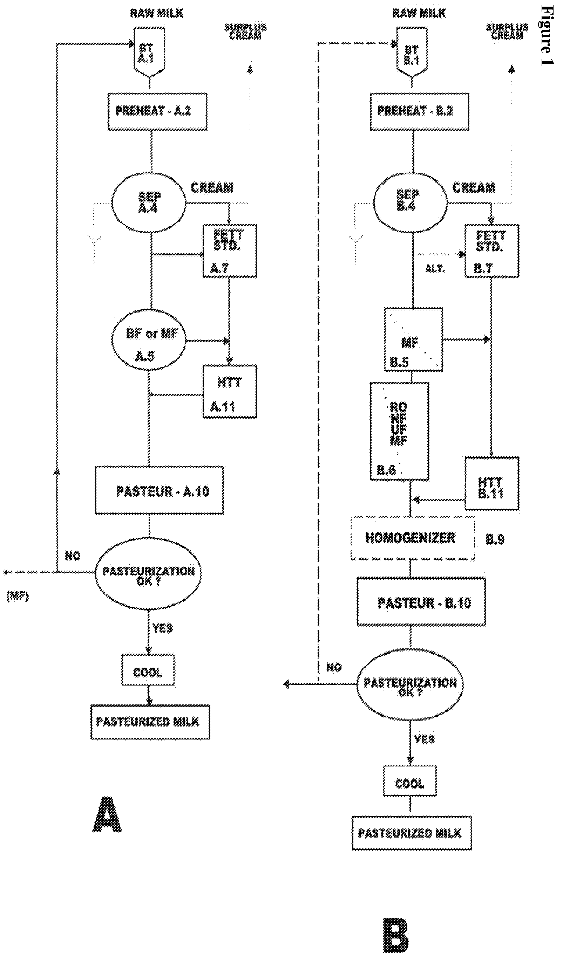

**Figure 1a** illustrates a prior art processing plant comprising a balance tank for raw milk (a1), a heating device (a2), a separator (a4), a bactofuge or microfiltration installation (a5), a fat standardization device (a7), a high temperature heating device (a11), a pasteurization device (a10) and a cooling device.
**Figure 1b** illustrates a prior art processing plant comprising a balance tank for raw milk (b1), a heating device (b2), a separator (b4), a microfiltration installation (b5), a membrane filtration installation (b6), a fat standardization device (b7), a high temperature heating device (b11), optionally a homogenization device (b9), a pasteurization device (b10) and a cooling device.

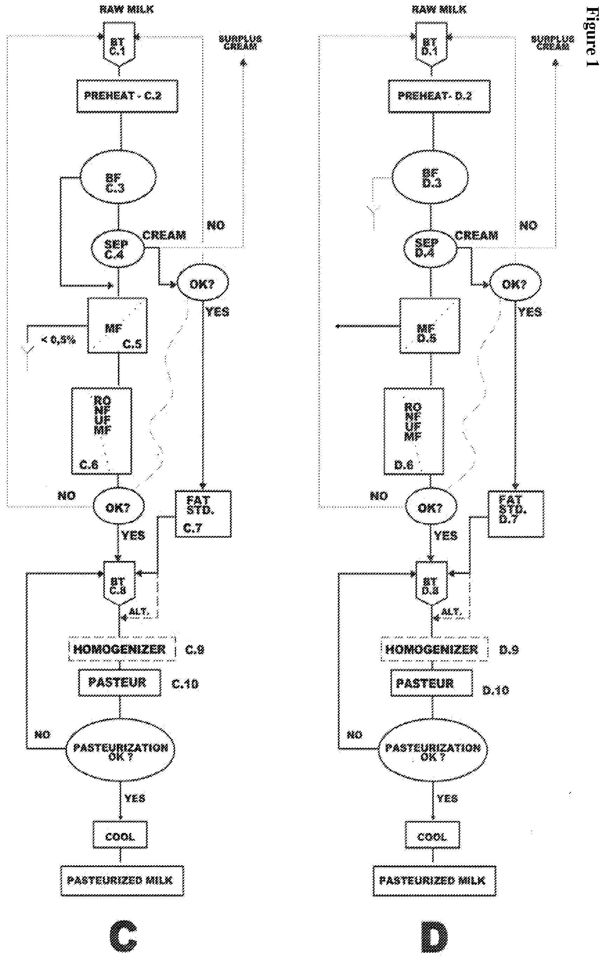

**Figure 1c** illustrates one embodiment being suitable for practicing the method of the present invention comprising a balance tank for raw milk (c1), a heating device (c2) adapted to heat raw milk to a temperature in the range 50-62 °C, a bactofuge (c3) adapted to remove microorganisms from raw milk, a separator (c4) adapted to separate raw milk into a cream fraction and a skimmed milk fraction, a microfiltration installation (c5) adapted to remove microorganisms from said skimmed milk fraction and thereby obtain a partly sterilized skimmed milk fraction, a membrane filtration installation (c6) e.g. adapted to concentrate said partly sterilized skimmed milk fraction, a balance tank for cream fraction (c7) adapted to balance or equalize any pressure or flow changes that may arise during preceding processing steps, a balance tank for processed milk (c8) adapted to balance or equalize any pressure or flow changes that may arise during preceding processing steps, optionally a homogenization device (c9) adapted to form a constant of different insoluble phases to obtain a suspension or emulsion, a pasteurization device (c10) adapted to reduce the number of viable pathogens in accordance with regulatory provisions and a cooling device; wherein said membrane filtration installation (c6) is in fluid communication with either said balance tank for raw milk (c1) or said balance tank for processed milk (c8); the outlet for cream phase of said separator (c4) is in fluid communication with either said balance tank for raw milk (c1) or said balance tank for cream fraction (c7); said pasteurization device (c10) is in fluid communication with either said cooling device or said balance tank for processed milk (c8).
**Figure 1d** illustrates one embodiment being suitable for practicing the method of the present invention comprising the same elements as the embodiment disclosed in figure 1c; the differences between the two embodiments being handling of the microorganism containing bactofugate (c3,d3) and handling of the microorganism containing retentate (c5,d5).
**Figure 2a** illustrates a complete prior art process for automatic direct standardization of milk and cream comprising a density transmitter (1), flow transmitter (2), control valve (3), control panel (4), constant pressure valve (5), shut-off valve (6) and a check valve (7).
**Figure 2b** illustrates prior art fat standardization of milk to a higher fat content than the incoming milk comprising a density transmitter (1), flow transmitter (2), control valve (3), control panel (4), constant pressure valve (5), shut-off valve (6) and a check valve (7).

### DETAILED DESCRIPTION OF THE INVENTION

In the context of the present invention, the term "milk "relates to milk-based products which may contain many, if not all, of the components of skimmed milk and optionally may contain various amounts milk fat and possibly also non-dairy additives such as non-dairy flavors, sweeteners, minerals and/or vitamins.

The term "whole milk" and "raw milk" is used interchangeably herein and refers to milk as it is delivered to the dairies; typically with a fat content around 4 % (w/w).

As used herein, the term "milk" is intended to encompass milks from animal and/or plant sources. Animal sources of milk include, but are not limited to, human, cow, sheep, goat, buffalo, camel, lama, mare and deer. Plant sources of milk include, but are not limited to, milk extracted from soybean. In a preferred embodiment of the invention, the raw milk comprises bovine milk.

The term "physical separation" as used herein means that one or more elements are separated from other elements, e.g. that microorganisms are separated from raw milk, contrary to other sterilization techniques which only kill the microorganisms and leave the dead microorganisms in the milk.

In the context of the present invention, the term "fluid communication" means that the sections, devices or installations which are in fluid communication are so arranged that that liquid can be moved from one section, device or installation to the other. This is typically implemented by interconnecting the relevant sections, devices or installations of the plant with pipes, and pumps and/or valves.

In the context of the present invention, the term "microorganisms" relates to e.g. bacteria, bacterial spores, yeasts, moulds and fungal spores.

Prior art methods for producing milk typically suffers from frequent temporarily shutdowns due to non-satisfactory pasteurization of the standardized milk product.

Thus, an object of the invention is to provide a more cost effective method for producing milk, the increased cost efficiency being the result of prolonged operation time and less down time.

Based on the finding that most of the instances resulting in temporarily process shutdown is caused by changes in the flow and/or pressure within the process plant which negatively affect the pasteurization process, the above problem has been solved by including a balance tank for processed milk (c8,d8) between the physical separation section (c1-c6, d1-d6) and the pasteurization device (c10, d10). The balance tank (c8, d8) is adapted to balance or equalize any pressure or flow changes that may arise during the preceding processing steps resulting in a close to constant flow (less pressure and flow changes) of liquid into the pasteurization device (c10, d10). As the flow of liquid into the pasteurization device is close to constant, the pasteurization device may operate at optimum efficiency resulting in prolonged operation time and less down time.

Thus a first aspect of the present invention relates to a method for producing milk, said method comprising the following steps:
a) providing raw milk;
b) subjecting the raw milk to treatment on a bactofuge (c3, d3) and thereby physically separating microorganisms from the raw milk;
c) separating the raw milk of step b) into a cream fraction and a skimmed milk fraction (c4,d4);
d) subjecting the skimmed milk fraction to microfiltration (c5,d5) adapted to remove microorganisms and thereby obtain a partly sterilized skimmed milk fraction;
e) optionally, subjecting the partly sterilized skimmed milk fraction to membrane filtration (c6,d6) adapted to standardize said partly sterilized skimmed milk fraction;
f) transporting the product of step d) or e) to a balance tank for processed milk (c8,d8), wherein said balance tank for processed milk is adapted to balance or equalize any pressure or flow changes that may arise during the preceding processing steps; and
g) subjecting the product obtained by the preceding steps to pasteurization (c10,d10) in order to obtain a pasteurized milk;
wherein
- a microfiltration retentate (c5, d5) of step d) is mixed with the raw milk; or a bactofugate of step b) is mixed with the skimmed milk fraction of step c);
- step g) involves subjecting the product to a temperature in the range 65°C to 80°C;
   and
- the method does not include a step prior to step g) involving temperature treatment of the product at temperatures ≥ 65°C.

In one preferred embodiment according to the present invention, the steps of the method are conducted in the given order.

The method of the invention may preferably be used for treating fresh raw milk, i.e. raw milk based on milk which has recently been milked from the source of the raw milk, e.g. from cows. For example, it may be preferred that the raw milk is at most 48 hours old, i.e. at most 48 hours since milking, and more preferably at most 36 hours old, such as at most 24 hours old.

It is preferred that the raw milk is of good quality and normally the raw milk comprises at most 100,000 colony forming units (cfu)/ml, preferably at most 50,000 cfu/ml, and even more preferably at most 25,000 cfu/mL. It may even be preferred that the raw milk comprises at most 10,000 cfu/ml, such as at most 7,500 cfu/mL.

In one preferred embodiment of the present invention, the raw milk delivered to the dairy is transferred to a balance tank for raw milk (c1,d1).

In order to facilitate separation of the raw milk into a cream fraction and a skimmed milk fraction, it is preferred that the raw milk is heated, preferably using a heat exchanger, to a temperature in the range 50-62°C (c2,d2), preferably in the range 52-62 °C, more preferably in the range 55-62°C, most preferably in the range 57-62°C, prior to separation. The temperature of the milk at this stage in the process line should preferably not exceed 62°C as some milk proteins may denaturize at higher temperatures.

Heating is a basic process within dairy processing and usually takes place in plate or tubular heat exchangers. "Tetra Spiraflo" is a tubular heat exchanger that has been successfully used by the liquid food industry for more than 15 years. "Tetra Plex" is a range of reliable and energy efficient plate heat exchangers consisting of several stainless steel corrugated plates with rubber gasket seals, wherein the plates are pressed together into a plate package and assembled between two rigid end plates. Inlets and outlets are located in the corner of the plates.

Prior to separation of the raw milk into a cream fraction and a skimmed milk fraction, the raw milk is preferably subjected to treatment resulting in completely or partly removal of microorganisms. In one preferred embodiment, said treatment involves subjecting the raw milk to treatment on a bactofuge (c3,d3).

Bactofugation is a process in which a specially designed centrifuge, the bactofuge, is used to separate bacteria, and especially the spores formed by specific bacteria strains, from milk. Bactofugation has proved to be an efficient way of reducing the number of spores in milk, since their density is higher than that of milk. Bactofugation normally separates the milk into a fraction that is more or less free from bacteria, and a concentrate (bactofugate), which contains both spores and bacteria in general and amounts to up to 3 % of the feed to the bactofuge.

In one embodiment according to the invention, the bactofugation comprises the use of at least one bactofuge, preferably at least two bactofuges in series, and even more preferably at least three bactofuges in series.

It is believed that the physical separation and removal of microorganisms significantly reduces biofilm formation down-stream in plant, which again i.a. guarantees the success of the cleaning step.
The raw milk, optionally the bactofugated milk fraction that is more or less free from bacteria, is then subjected to treatment resulting in separation of the raw milk into a cream fraction and a skimmed milk fraction. Preferably, the raw milk, optionally the bactofugated milk fraction that is more or less free from bacteria, is subjected to treatment on a separator (c4,d4). Said separator preferably being adapted to separate the raw milk, optionally the bactofugated milk fraction that is more or less free from bacteria, into a cream fraction and a skimmed milk fraction.

A separator is typically a centrifugal device that separates milk into cream and skimmed milk. Manual rotation of the separator handle typically turns a worm gear mechanism which causes the separator bowl to spin at thousands of revolutions per minute. When spun, the heavier milk is pulled outward against the walls of the separator and the cream, which is lighter, collects in the middle. The cream and milk then flow out of separate spouts.

An alternative to sequential use of a bactofuge (c3,d3) and a separator (c4,d4) is the use of a so called bactofuge-separator. Said bactofuge-separator preferably being adapted to separate raw milk into a microorganism fraction, skimmed milk fraction and a cream fraction.

Thus, in one embodiment according to the present invention, the steps involving the use of a bactofuge (step b) and separator (step c) may be replaced by a step involving the use of a bactofuge-separator.

A bactofuge-separator is typically a centrifugal device that separates raw milk into a cream fraction, skimmed milk fraction and a fraction enriched in microorganisms. Manual rotation of the bactofuge-separator handle typically turns a worm gear mechanism which causes the bactofuge-separator bowl to spin at thousands of revolutions per minute. When spun, the heavier microorganisms are pulled outward against the walls of the bactofuge-separator bowl, the skimmed milk which is lighter collects between the walls and the centre of the bactofuge-separator bowl and the cream which is lightest collects close to the centre of the bactofuge-separator bowl. The cream, skimmed milk and microorganisms then flow out of separate spouts.

The skimmed milk fraction is typically subjected to treatment resulting in partly or completely separation of microorganisms from the skimmed milk fraction (c5,d5). Said treatment preferably being microfiltration (MF) adapted to remove microorganisms such as bacteria and spores.

In a preferred embodiment of the invention, the microfiltration (MF) is performed using a filter having a pore size in the range of 0.5-2.0 micron, preferably in the range of 0.6-1.4 micron, even more preferably in the range of 0.8-1.4 micron and most preferably in the range 1.0-2.0 micron. These pore size ranges have been found to be advantages as they retain most of the microorganisms of the milk derivative with substantially no alteration of the protein composition of the milk.

In an embodiment of the invention, the used micro filter is a cross-flow micro filter.

"Tetra Alcross Bactocatch" and "Tetra Alcross M" are suitable microfiltatration solutions for bacteria and spore removal. The specially designed ceramic microfiltration filter is believed to remove more than 99.9% of bacteria and spores from the skimmed milk.

In one embodiment according to the present invention, the bactofugate (c3) containing both spores and bacteria is mixed with the skimmed milk fraction (c4) prior to physically separating microorganisms from the skimmed milk fraction by membrane filtration techniques (c5). By doing so, the yield is significantly increased as less amount of potential useful product needs to be deposited. This embodiment is illustrated in figure 1c.

In another embodiment according to the present invention, the bactofugate containing both spores and bacteria is deposited. The deposited material may be deposited as waste, or optionally used in production of products which is not sensitive to the content of spores or used in production of products where high temperature treatment of the product does not reduce the quality of the product. This embodiment is illustrated in figure 1d.

In one embodiment according to the present invention, the microorganism enriched fraction obtained after treatment on a bactofuge-separator is mixed with the skimmed milk fraction prior to physically separating microorganisms from the skimmed milk fraction by membrane filtration techniques. By doing so, the yield is significantly increased as less amount of potential useful product needs to be deposited. This embodiment is illustrated in figure 1c.

In another embodiment according to the present invention, the microorganism enriched fraction obtained after treatment on a bactofuge-separator is deposited. The deposited material may be deposited as waste, or optionally used in production of products which is not sensitive to the content of spores or used in production of products where high temperature treatment of the product does not reduce the quality of the product. This embodiment is illustrated in figure 1d.

In one embodiment according to the present invention, the microfiltration -retentate (c5, d5), containing high amounts of microorganisms, is mixed with the raw milk (d1,d2, d3 or d4) or the skimmed milk fraction prior to physically separating microorganisms from the skimmed milk fraction by membrane filtration techniques (d5). Preferably, the microfiltration -retentate (c5, d5) is mixed with the raw milk (d1, d2, d3 or d4). More preferably, the microfiltration -retentate (c5, d5) is mixed with the raw milk (d1 or d2). Most preferably, the microfiltration -retentate (c5, d5) is mixed with the raw milk (d1), i.e. that the microfiltration -retentate (c5, d5) is returned/transported to the balance tank for raw milk (d1). By doing so, the yield is significantly increased as less amount of potential useful product needs to be deposited. This embodiment is illustrated in figure 1d.

Optionally, the microfiltration -retentate (c5, d5) which contains high amounts of microorganisms is concentrated to a small volume, like less than 0.5 % (v/v) of the product entering the microfiltration installation (c5, d5). The microfiltration -retentate (c5, d5) is then either deposited as waste or optionally used in production of products which is not sensitive to the content of spores or used in production of products where high temperature treatment of the product does not reduce the quality of the product.

Depending on which end product the milk is to be employed for the fat content, casein content, total protein content, lactose content, mineral content, minerals : protein ratio, lactose : protein ratio and/or water content should be standardized accordingly, preferably prior to pasteurization.

Said casein content preferably being a specific percentage, or percentage range, by weight of the total mixture. Said fat content preferably being a specific percentage, or percentage range, by weight of the total mixture. Said lactose content preferably being a specific percentage, or percentage range, by weight of the total mixture. Said mineral content preferably being a specific percentage, or percentage range, by weight of the total mixture. Said total protein content preferably being a specific percentage, or percentage range, by weight of the total mixture. Said lactose : protein ratio preferably being a weight based ratio or a weight based ratio range. Said minerals : protein ratio preferably being a weight based ratio or a weight based ration range. Said water content preferably being a specific percentage, or percentage range, by weight of the total mixture.

Standardization in respect of casein content, total protein content, lactose content, mineral content, minerals : protein ratio, lactose : protein ratio and/or water content is typically achieved by subjecting the microfiltration -permeate (c5, d5) containing partly sterilized skimmed milk to membrane filtration (c6,d6) adapted to standardize said partly sterilized skimmed milk fraction. Standardization in respect of fat content is typically achieved by a different step downstream the process line.

Said membrane filtration (c6,d6) preferably being selected from reverse osmosis (RO), nanofiltration (NF), ultrafiltration (UF), microfiltration (MF) and/or diafiltering (DF); or any combination thereof. In one preferred embodiment said membrane filtration (c6,d6) is reverse osmosis (RO). In another preferred embodiment said membrane filtration (c6,d6) is nanofiltration (NF). In yet another preferred embodiment said membrane filtration (c6,d6) is ultrafiltration (UF). In yet another preferred embodiment said membrane filtration (c6,d6) is microfiltration (MF). If microfiltration (MF) is to be used, the pores in the microfiltration membrane are typically smaller in size than the pores of the microfilter used for reducing the amount of microorganisms (c5, d5).

Reverse osmosis (RO) is a membrane technical filtration method that removes many types of large molecules and ions from solutions by applying pressure to the solution when it is on one side of a selective membrane. The result is that the solute is retained on the pressurized side of the membrane and the pure solvent is allowed to pass to the other side. To be "selective," this membrane should not allow large molecules or ions through the pores (holes), but should allow smaller components of the solution (such as the solvent) to pass freely. The membranes used for reverse osmosis typically have a dense layer in the polymer matrix where most separation occurs. In most cases, the membrane is designed to allow only water to pass through this dense layer, while preventing the passage of solutes (such as salt ions). Preferably, the membrane is designed to allow only water to pass through the membrane while preventing the passage of the remaining components. As RO is particularly suitable for removing water, the skimmed milk fraction may be concentrated by this technique.

Nanofiltration (NF) is a relatively recent membrane filtration process used most often with low total dissolved solids water. Preferably, the membrane is designed to allow water and ions, preferably monovalent ions, to pass through the membrane while preventing the passage of the remaining components. As NF is particularly suitable for removing water and ions, the skimmed milk fraction may be simultaneously concentrated and demineralised by this technique.

Ultrafiltration (UF) is a variety of membrane filtration in which hydrostatic pressure forces a liquid against a semipermeable membrane. Suspended solids and solutes of high molecular weight are retained, while water and low molecular weight solutes pass through the membrane. This separation process is typically used in industry and research for purifying and concentrating macromolecular (10³ - 10⁶ Da) solutions, especially protein solutions. As UF is particularly suitable for retaining high molecular weight compounds such as proteins, the skimmed milk fraction may be simultaneously concentrated and demineralised by this technique.

Microfiltration (MF) is a membrane technical filtration process which typically removes contaminants from a fluid by passage through a microporous membrane. A typical microfiltration membrane pore size range is 0.1 to 10 micrometres (µm). In this MF process step (c6, d6) membrane pore size range 0.1 to 0.2 micrometers is typically used to let water and other low molecular weight compounds pass through the membrane.

Diafiltration (DF) involves any of the above membrane systems wherein fresh solvent is added to the feed stream to replace the permeate volume, at the same rate as the permeate flow rate, such that the volume in the system remains constant.

Standardization of the partly sterilized skimmed milk fraction prior to pasteurization is of most importance at start-up, as the water present in the system after periodic cleaning cause significant dilution of the initial raw milk entering the system. In order to reduce the loss of potential useful product, at start-up in particular, the partly sterilized skimmed milk fraction should undergo a quality analysis, preferably automated, prior to pasteurization in order to determine whether the product is standardized according to predetermined standardization criteria.

Thus, in one embodiment according to the present invention the step involving membrane filtration (c6,d6) is adapted to concentrate the skimmed milk, said in other words adapted to reduce the amount of water present in the skimmed milk fraction. Reverse osmosis (RO) and nanofiltration (NF) are suitable for concentrating the skimmed milk fraction, in particular reverse osmosis (RO).

Said predetermined standardization criteria may e.g. be selected from the following:
- the water content of the partly sterilized skimmed milk fraction should preferably be in the range 10-99 % (w/w), more preferably in the range 20-97 % (w/w), even more preferably in the range 30-95 % (w/w) and most preferably in the range 50-91 % (w/w) such as e.g. in the range 80-91 % (w/w); and/or
- the protein content of the partly sterilized skimmed milk fraction should preferably be in the range 1-90 % (w/w), more preferably in the range 3-80 % (w/w), even more preferably in the range 5-70 % (w/w) and most preferably in the range 9-50 % (w/w) such as e.g. in the range 9-20 % (w/w).

If the partly sterilized skimmed milk fraction does not satisfy predetermined standardization criteria the partly sterilized skimmed milk fraction should be recycled back to step a), b), c), d) and/or e). If the partly sterilized skimmed milk fraction is recycled back to step a), b), c), d) and/or e) it is preferred that the cream fraction is recycled back to step a), b) and/or c).

As neither the partly sterilized skimmed milk fraction nor the cream fraction have been subjected to high temperature treatment, clogging of membrane filters downstream the process line should not be an issue.

The above processing steps result in a partly sterilized skimmed milk fraction which needs to be subjected to pasteurization before it can be sold as a commercial product or used as raw material in the production of other dairy products such as e.g. cheese.

However, as mentioned above, the inventor of the present invention has observed that most of the instances resulting in temporarily process shutdown are caused by changes in the flow and/or pressure within the process plant which negatively affect the pasteurization process. This problem has been solved by including a balance tank for processed milk (c8,d8) between the physical separation section (c1-c6, d1-d6) and the pasteurization device (c10,d10). The balance tank (c8, d8) is adapted to balance or equalize any pressure or flow changes that may arise during the preceding processing steps.

Accordingly, the partly sterilized skimmed milk fraction which satisfies the predetermined standardization criteria is transferred to a balance tank for processed milk (c8,d8) prior to pasteurization. By doing so, the flow of liquid into the Pasteur (c10, d10) is almost constant (less or no pressure and flow changes) resulting in prolonged operation time and less down time.

The cream fraction is preferably transported to a balance tank for cream fraction (c7,d7). Said balance tank for cream fraction (c7,d7) preferably being adapted to balance or equalize any pressure or flow changes that may arise during the preceding processing steps.

If the amount of microorganisms present in the cream fraction is sufficiently low, which is the case when raw milk has been subjected to treatment on a bactofuge (c3, d3) and a separator (c4, d4) or subjected to treatment on a bactofuge-separator, the need for high temperature treatment may not be necessary. Avoiding that the cream is subjected to high temperature treatment results in extensive cost savings and may also positively affect the quality of the product.

In one embodiment according to the present invention, said cream fraction is not subjected to high temperature treatment. In another embodiment, said cream fraction is not subjected to high temperature treatment prior to pasteurization.

While prior art installations necessary to prepare fat standardized milk is quite complex (see figures 2a and 2b), fat standardization according to the present invention is simple as changes in flow and/or pressure during processing is not an issue.

The skimmed milk fraction present in the balance tank for processed milk (c8, d8) may easily be mixed with predetermined amounts of cream present in the balance tank for cream (c7, d7) by volumetric mixing in order to obtain fat standardized milk. Said volumetric mixing may preferably take place in the balance tank for processed milk (c8, d8) or optionally in the processed milk pipeline connected to the balance tank for processed milk outlet. Preferably, the volumetric mixing is taking place in the processed milk pipeline connected to the balance tank for processed milk outlet but prior to the homogenization device and pasteurization device.

In one embodiment according to the present invention, the standardized milk is subjected to treatment on a homogenizer (c9,d9) prior to pasteurization.

Homogenization is typically intensive blending of mutually related substances or groups of mutually related substances to form a constant of different insoluble phases (sometimes with addition of surfactants) to obtain a suspension or emulsion. By reducing the size of the remaining milk fat particles, you may prevent the milk fat from separating and floating to the surface as cream. It also ensures that the milk fat will be evenly distributed through the milk.

The product of the above processing steps is then subjected to pasteurization (c10,d19). As the flow of liquid into the pasteurization device is close to constant, the pasteurization device may operate at optimum efficiency resulting in prolonged operation time and less down time.

As mentioned above, pasteurization methods are usually standardized and controlled by national food safety agencies. These agencies require milk to be HTST pasteurized in order to qualify for the "pasteurization" label. There are different standards for different dairy products, depending on the fat content and the intended usage. For example, the pasteurization standards for cream may differ from the standards for fluid milk.

If the pasteurization process parameters deviate from regulatory requirements during production, it has been common practice that the insufficiently pasteurized milk product is recycled back to the initial processing step where it is mixed with raw milk until the process parameters are back on track; optionally the insufficiently pasteurized milk product is to be discarded.

Mixing the non-satisfactory pasteurized milk product with the raw milk and subjecting the mixture to treatment on a separator and the consecutive processing steps may be of no big concern as long as the process line does not include some sort of membrane filtration equipment. However, recent years it has become more and more common to include one or more membrane filtration processing steps in the process line to remove water, microorganisms, lactose or for protein fractionation. As membrane filters are easily clogged by denaturized proteins, it is in practice not an option to recycle heat treated milk products to the initial processing step.

Not only the presence of a membrane filtration processing step but also the presence of a homogenization step basically excludes the option to recycle non- satisfactory pasteurized milk products to the initial processing step. As homogenized milk is difficult to separate into a skimmed milk fraction and a cream fraction, the skimmed milk fraction derived from homogenized milk will necessarily contain relatively high amounts of fat which again will decrease the capacity of membrane filtration down-stream in plant.

In order to minimize the negative consequences of necessary temporarily shutdowns, the present inventor has suggested that the insufficiently pasteurized milk product is recycled back to the balance tank for processed milk (c8, d8).

Once the content of the balance tank for processed milk (c8, d8) reaches a critical level, such as 80 % (v/v) of total volume, 85 % (v/v) of total volume, 90 % (v/v) of total volume, 95 % (v/v) of total volume or 100 % (v/v) of total volume, the partly sterilized milk fraction (e.g. product of step e) is typically recycled back to step a), b), c) or d).

Once the balance tank for raw milk reaches a critical level, such as 80 % (v/v) of total volume, 85 % (v/v) of total volume, 90 % (v/v) of total volume, 95 % (v/v) of total volume or 100 % (v/v) of total volume, the feed of raw milk to the balance tank for raw milk (c1,d1) is typically temporarily stopped.

If the pasteurization process parameters do not deviate from regulatory requirements during production, the pasteurized product is preferably cooled down to a suitable temperature.

If the milk is to be used as "drinking milk", said suitable temperature is preferably in the range 0-10°C, more preferably 1-10°C, even more preferably 3-5 °C and most preferably cooled down to a temperature of about 4 °C prior to packaging. If the milk is to be used in the production of cheese, said suitable temperature is preferably in the range 15-48°C, more preferably in the range 20-38°C, most preferably in the range 25-38 °C such as e.g. a temperature of about 30°C.

Following pasteurization, the recommended bacterial count should not exceed 20,000 cfu/ml. After UHT processing, e.g. at 149 °C for 3 seconds, no microorganism/spore is capable of survival, as measured by standard plate count tests (GiINs et al., J Dairy Sci.1985 2875-9).

Suitable methods for determining the viable spore count in milk or milk-derived products are known in the art: For example standard plate count tests are described by Marth, E. H., ed. 1978. in Standard methods for the examination of dairy products. Am. Publ. Health Assoc, Washington, DC. According to a standard method, milk samples are plated on a medium of Milk Agar (Oxoid), and colonies are counted after 3 d incubation at 30 degrees C (Health protection agency (2004) Plate count test at 30 degrees C. National Standard Method D2 IISue 3, www.hpa-standardmethods.orq.uk/pdf sops.asp. Alternatively, spore counts can be determined by direct microscopic count using bright-field microscopy and Thoma counting chamber procedures.

Packaging may be any suitable packaging techniques and any suitable container may be used for packaging the milk or milk-related product of the invention. However, in a preferred embodiment of the invention, the packaging is aseptic packaging, i.e. the milk or milk-related product is packaged under aseptic conditions. For example, the aseptic packaging may be performed by using an aseptic filling system, and it preferably involves filling the milk into one or more aseptic container(s). Examples of useful containers are e.g. bottles, cartons, bricks, and/or bags.

Extended shelf life is achieved primarily through filling in sanitary environments with packaging that has been sterilized. Hydrogen peroxide is the most commonly used sterilizing agent, and packaging material is generally rinsed or blown dry with hepafiltrated air after sterilization. In some cases, plastic packaging can be blowmolded with a sealed top using hepafiltrated air. The top is then trimmed in the filler just before filling. Both paperboard and plastic packaging materials can be manufactured with barrier layers that block light penetration and oxygen migration. This can be particularly beneficial for milk, as milk tends to take on off flavors when it suffers prolonged exposure to light or oxygen.
In one embodiment according to the present invention, the method is a continuous process, a batch process or a combination thereof.

In a particularly preferred embodiment according to the present invention, the method for producing milk comprises the following steps in their given order:
a) providing raw milk;
b) subjecting the raw milk to heat treatment, wherein the raw milk is heated to a temperature in the range 50-62 °C;
c) subjecting the heated raw milk to treatment on a bactofuge (c3,d3);
d) subjecting the raw milk having reduced microorganism content to treatment on a separator (c4,d4), thereby obtaining a cream fraction and a skimmed milk fraction;
e) subjecting the skimmed milk fraction to microfiltration in order to obtain a partly sterilized skimmed milk fraction (c5, d5);
f) subjecting the partly sterilized skimmed milk fraction to some sort of membrane filtration adapted to standardize said partly sterilized skimmed milk fraction (c6, d6);
g) optionally, recycling the product of step f) back to step a), b), c), d), e) or f);
h) transporting the product of step f) to a balance tank for processed milk (c8,d8),
   wherein said balance tank for processed milk is adapted to balance or equalize any pressure or flow changes that may arise during the preceding processing steps;
i) transporting the cream fraction to a balance tank for cream (c7,d7), wherein said balance tank for cream is adapted to balance or equalize any pressure or flow changes that may arise during the preceding processing steps;
j) transporting a predetermined amount of the cream fraction from the balance tank for cream (c7,d7) to i) the balance tank for processed milk (c8,d8) or ii) into the processed milk pipeline connected to the balance tank for processed milk outlet, for fat standardization;
k) subjecting the fat standardized milk product to homogenization (c9, d9);
l) subjecting the homogenized fat standardized milk to pasteurization; and
m) cooling the pasteurized fat standardized milk to a suitable temperature.

In another particularly preferred embodiment according to the present invention, the method for producing milk comprises the following steps in their given order:
a) providing raw milk;
b) subjecting the raw milk to heat treatment, wherein the raw milk is heated to a temperature in the range 50-62 °C;
c) subjecting the heated raw milk to treatment on a bactofuge-separator, thereby obtaining a cream fraction, skimmed milk fraction and a microorganism containing fraction;
d) subjecting the skimmed milk fraction to microfiltration in order to obtain a partly sterilized skimmed milk fraction (c5, d5);
e) subjecting the partly sterilized skimmed milk fraction to membrane filtration (c6,d6) adapted to standardize said partly sterilized skimmed milk fraction;
f) optionally, recycling the product of step e) back to step a), b), c), d) or e);
g) transporting the product of step e) to a balance tank for processed milk (c8,d8), wherein said balance tank for processed milk is adapted to balance or equalize any pressure or flow changes that may arise during the preceding processing steps;
h) transporting the cream fraction to a balance tank for cream (c7,d7), wherein said balance tank for cream is adapted to balance or equalize any pressure or flow changes that may arise during the preceding processing steps;
i) transporting a predetermined amount of the cream fraction from the balance tank for cream (c7,d7) to i) the balance tank for processed milk (c8,d8) or ii) into the processed milk pipeline connected to the balance tank for processed milk outlet, for fat standardization;
j) subjecting the fat standardized milk product to homogenization (c9, d9);
k) subjecting the homogenized fat standardized milk to pasteurization; and
l) cooling the pasteurized fat standardized milk to a suitable temperature.

In one embodiment according to the present invention, the steps of the method are conducted in the given order.

In one embodiment according to the present invention, said milk is to be used as "drinking milk". In another embodiment according to the present invention, said milk duct is to be used in the production of cheese.

In one embodiment according to the present invention, said milk is skimmed milk, preferably pasteurized skimmed milk. In another embodiment according to the present invention, said milk is cream. In yet another embodiment according to the present invention, said milk is skimmed milk, cream and/or any mixture thereof.

In an embodiment of the invention, the milk comprises at most 60% w/w milk fat. An example of such a milk is cream double.

In another embodiment of the invention, the milk comprises at most 40% w/w milk fat. An example of such a milk is whipping cream.

In yet an embodiment of the invention, the milk comprises at most 20% w/w milk fat. An example of such a milk is table cream containing 18% w/w milk fat.

In a further embodiment of the invention, the milk comprises at most 4% w/w milk fat.

An example of such a milk is full fat milk which typically contains 2-4% w/w milk fat, and preferably approx. 3% w/w milk fat.

In a further embodiment of the invention, the milk comprises at most 1.5 w/w milk fat. An example of such a milk is semi-skim milk which typically contains 0.7-2% w/w milk fat, and preferably 1-1.5% w/w milk fat.

In an additional embodiment of the invention, the milk comprises at most 0.7 w/w milk fat. An example of such a milk is skim milk which normally contains 0.1-0.7% w/w milk fat, and preferably 0.3-0.6% w/w milk fat, such as approx. 0.5% w/w milk fat.

In a preferred embodiment of the invention, the milk comprises at most 0.1% w/w milk fat. An example of such a milk is skim-milk having a fat content in the range of 0.05-0.1% w/w.

In yet a preferred embodiment of the invention, the milk comprises 2.5-4.5% w/w casein, 0.25-1% w/w milk serum protein, and 0.01-3% milk fat. In an even more preferred embodiment of the invention, the milk comprises 2.5-4.5% w/w casein, 0.25-1 % w/w milk serum protein, and 0.01-0.1% milk fat.

The milk normally comprises water, and may e.g. comprise at least 60% (w/w) water, preferably at least 70% (w/w) water, and even more preferably at least 80% (w/w) water. For example, the milk may comprise at least 85% (w/w) water, preferably at least 87.5% (w/w) water, and even more preferably at least 90% (w/w) water.

In one embodiment according to the present invention, the milk is a milk produced from raw milk.

In one embodiment according to the present invention, the milk is standardized milk, preferably standardized milk produced from raw milk. Said standardized milk preferably being standardized in respect of fat content, casein content and/ or water content.

The term "standardized" as used herein refers to a predetermined concentration of a certain compound, like e.g. water, or a group of compounds, like e.g. fat.

In one embodiment according to the present invention, the method for producing milk is a method for processing raw milk.

In one embodiment according to the present invention, said milk is milk. In another embodiment according to the present invention, said milk is pasteurized milk. In one embodiment according to the present invention, said milk or pasteurized milk being suitable to be used as "drinking milk". In another embodiment according to the present invention, said milk or pasteurized milk being suitable to be used in the production of other milk based products such as e.g. cheese.

In one embodiment according to the present invention, the claimed method does not include a step prior to pasteurization involving temperature treatment at temperatures ≥ 140 °F (60°C). Preferably, the claimed method does not include a step prior to pasteurization involving temperature treatment at temperatures ≥ 143.6 °F (62°C). More preferably, the claimed method does not include a step prior to pasteurization involving temperature treatment at temperatures ≥ 145 °F (62.78°C); such as ≥ 149 °F (65°C).

In one embodiment according to the present invention, the claimed method does not include a step prior to pasteurization involving temperature treatment of the product at temperatures ≥ 140 °F (60°C). Preferably, the claimed method does not include a step prior to pasteurization involving temperature treatment of the product at temperatures ≥ 143.6 °F (62°C). More preferably, the claimed method does not include a step prior to pasteurization involving temperature treatment of the product at temperatures ≥ 145 °F (62.78°C); such as ≥ 149 °F (65°C).

In one embodiment according to the present invention, the claimed method does not include a step after pasteurization involving temperature treatment at temperatures ≥ 140 °F (60°C). Preferably, the claimed method does not include a step after pasteurization involving temperature treatment at temperatures ≥ 143.6 °F (62°C). More preferably, the claimed method does not include a step after pasteurization involving temperature treatment at temperatures ≥ 145 °F (62.78°C); such as ≥ 149 °F (65°C), ≥ 158 °F (70°C), ≥ 167 °F (75°C), ≥ 176 °F (80°C), ≥ 194 °F (90°C), ≥ 212 °F (100°C), ≥ 280 °F (137.78°C), ≥ 302 °F (150°C) or ≥ 392 °F (200°C). In one preferred embodiment according to the present invention, the claimed method does not include a step after pasteurization involving temperature treatment at temperatures ≥ 161.6 °F (72 °C). In another preferred embodiment according to the present invention, the claimed method does not include a step after pasteurization involving temperature treatment at temperatures ≥ 168.8 °F (76°C). In another preferred embodiment according to the present invention, the claimed method does not include a step after pasteurization involving temperature treatment at temperatures ≥ 203 °F (95°C).

In one embodiment according to the present invention, the claimed method does not include a step after pasteurization involving temperature treatment of the product at temperatures ≥ 140 °F (60°C). Preferably, the claimed method does not include a step after pasteurization involving temperature treatment of the product at temperatures ≥ 143.6 °F (62°C). More preferably, the claimed method does not include a step after pasteurization involving temperature treatment of the product at temperatures ≥ 145 °F (62.78°C); such as ≥ 149 °F (65°C), ≥ 158 °F (70°C), ≥ 167 °F (75°C), ≥ 176 °F (80 °C), ≥ 194 °F (90°C), ≥ 212 °F (100°C), ≥ 280 °F (137.78°C), ≥ 302 °F (150°C) or ≥ 392 °F (200°C). In one preferred embodiment according to the present invention, the claimed method does not include a step after pasteurization involving temperature treatment of the product at temperatures ≥ 161.6 °F (72°C). In another preferred embodiment according to the present invention, the claimed method does not include a step after pasteurization involving temperature treatment of the product at temperatures ≥ 168.8 °F (76°C). In another preferred embodiment according to the present invention, the claimed method does not include a step after pasteurization involving temperature treatment of the product at temperatures ≥ 203 °F (95°C). Said product being the starting material (raw milk), the end product (milk) and/or any intermediate product thereof.

In one embodiment according to the present invention, the pasteurization step of the claimed method being the only step involving temperature treatment at temperatures ≥ 140 °F (60°C). In another embodiment according to the present invention, the pasteurization step of the claimed method being the only step involving temperature treatment at temperatures ≥ 145 °F (62.78°C); such as ≥ 149 °F (65°C), ≥ 158 °F (70 °C), ≥ 167 °F (75°C), ≥ 176 °F (80°C), ≥ 194 °F (90°C), ≥ 212 °F (100°C), ≥ 280 °F (137.78°C), ≥ 302 °F (150°C) or ≥ 392 °F (200°C). In yet another embodiment according to the present invention, the pasteurization step of the claimed method being the only step involving temperature treatment at temperatures ≥ 161.6 °F (72°C). In yet another embodiment according to the present invention, the pasteurization step of the claimed method being the only step involving temperature treatment at temperatures ≥ 168.8 °F (76°C). In yet another embodiment according to the present invention, the pasteurization step of the claimed method being the only step involving temperature treatment at temperatures ≥ 203 °F (95°C).

In one embodiment according to the present invention, the pasteurization step of the claimed method being the only step involving temperature treatment of the product at temperatures ≥ 140 °F (60°C). In another embodiment according to the present invention, the pasteurization step of the claimed method being the only step involving temperature treatment of the product at temperatures ≥ 145 °F (62.78°C); such as ≥ 149 °F (65°C), ≥ 158 °F (70°C), ≥ 167 °F (75°C), ≥ 176 °F (80°C), ≥ 194 °F (90°C), ≥ 212 °F (100°C), ≥ 280 °F (137.78°C), ≥ 302 °F (150°C) or ≥ 392 °F (200°C). In yet another embodiment according to the present invention, the pasteurization step of the claimed method being the only step involving temperature treatment of the product at temperatures ≥ 161.6 °F (72°C). In yet another embodiment according to the present invention, the pasteurization step of the claimed method being the only step involving temperature treatment of the product at temperatures ≥ 168.8 °F (76°C). In yet another embodiment according to the present invention, the pasteurization step of the claimed method being the only step involving temperature treatment of the product at temperatures ≥ 203 °F (95°C). Said product being the starting material (raw milk), the end product (milk) and/or any intermediate product thereof.

In one embodiment according to the present invention, the cream fraction is not subjected to temperature treatment at temperatures ≥ 140 °F (60°C). In another embodiment according to the present invention, the cream fraction is not subjected to temperature treatment at temperatures ≥ 145 °F (62.78°C); such as ≥ 149 °F (65°C), ≥ 158 °F (70°C), ≥ 167 °F (75°C), ≥ 176 °F (80°C), ≥ 194 °F (90°C), ≥ 212 °F (100°C), ≥ 280 °F (137.78°C), ≥ 302 °F (150°C) or ≥ 392 °F (200°C). In yet another embodiment according to the present invention, the cream fraction is not subjected to temperature treatment at temperatures ≥ 161.6 °F (72°C). In yet another embodiment according to the present invention, the cream fraction is not subjected to temperature treatment at temperatures ≥ 168.8 °F (76°C). In yet another embodiment according to the present invention, the cream fraction is not subjected to temperature treatment at temperatures ≥ 203 °F (95°C).

In one embodiment according to the present invention, the cream fraction per se is not subjected to temperature treatment at temperatures ≥ 140 °F (60°C). In another embodiment according to the present invention, the cream fraction per se is not subjected to temperature treatment at temperatures ≥ 145 °F (62.78°C); such as ≥ 149 °F (65°C), ≥ 158 °F (70°C), ≥ 167 °F (75°C), ≥ 176 °F (80°C), ≥ 194 °F (90°C), ≥ 212 °F (100°C), ≥ 280 °F (137.78°C), ≥ 302 °F (150°C) or ≥ 392 °F (200°C). In yet another embodiment according to the present invention, the cream fraction per se is not subjected to temperature treatment at temperatures ≥ 161.6 °F (72°C). In yet another embodiment according to the present invention, the cream fraction per se is not subjected to temperature treatment at temperatures ≥ 168.8 °F (76°C). In yet another embodiment according to the present invention, the cream fraction per se is not subjected to temperature treatment at temperatures ≥ 203 °F (95°C). Said cream fraction per se being the cream fraction which is not mixed with the skimmed milk fraction.

In one embodiment according to the present invention, neither the raw milk, the skimmed milk fraction nor the cream fraction is subjected to temperature treatment at temperatures ≥ 140 °F (60°C) prior to pasteurization. In another embodiment according to the present invention, neither the raw milk, the skimmed milk fraction nor the cream fraction is subjected to temperature treatment at temperatures ≥ 145 °F (62.78°C); such as ≥ 149 °F (65°C).

In one embodiment according to the present invention, the pasteurization step involves subjecting the product to a temperature in the range 140 °F (60°C) to 392 °F (200°C), more preferably in the range 140 °F (60°C) to 212 °F (100°C), even more preferably in the range 140 °F (60°C) to 176 °F (80°C) and most preferably in the range 145 °F (62.78°C) to 176 °F (80°C) such as e.g. in the range 149 °F (65°C) to 176 °F (80°C) or in the range 158 °F (70°C) to 176 °F (80°C). In a preferred embodiment according to the present invention, the pasteurization step involves subjecting the product to a temperature of 145 °F (62.78°C), 161.6 °F (72°C) or 168.8 °F (76°C), more preferably 161.6 °F (72°C) or 168.8 °F (76°C) and most preferably 168.8 °F (76°C). Said product being the starting material (raw milk), the end product (milk) and/or any intermediate product thereof.

In one embodiment according to the present invention, the pasteurization step involves subjecting the product to a temperature in the range 140 °F (60°C) to 392 °F (200°C), more preferably in the range 140 °F (60°C) to 212 °F (100°C), even more preferably in the range 140 °F (60°C) to 176 °F (80°C) and most preferably in the range 145 °F (62.78°C) to 176 °F (80°C) such as e.g. in the range 149 °F (65°C) to 176 °F (80°C) or in the range 158 °F (70°C) to 176 °F (80°C). In a preferred embodiment according to the present invention, the pasteurization step involves subjecting the product to a temperature of 145 °F (62.78°C), 161.6 °F (72°C) or 168.8 °F (76°C), more preferably 161.6 °F (72°C) or 168.8 °F (76°C) and most preferably 168.8 °F (76°C). Said product being the product obtained by the steps preceding the pasteurization step.

A milk processing plant being suitable for practicing the method according to the first aspect of the present invention is described.

Said processing plant preferably comprising:
- a physical separation section adapted to separate raw milk into a cream fraction and skimmed milk fraction, remove microorganisms from said skimmed milk fraction and standardize the skimmed milk fraction;
- a balance tank for processed milk (c8,d8), wherein said balance tank for processed milk is adapted to balance or equalize any pressure or flow changes that may arise during the preceding processing steps; and
- a pasteurization device (c9,d9), where the pasteurization device is adapted to reduce the number of viable pathogens in accordance with regulatory provisions.

In one embodiment, said physical separation section comprises:
- a separator (c4, d4) adapted to separate raw milk into a cream fraction and a skimmed milk fraction; or a bactofuge-separator, wherein said bactofuge-separator is adapted to separate raw milk into a cream fraction, skimmed milk fraction and microorganism fraction;
- a microfiltration installation (c5, d5), wherein the microfiltration installation is adapted to remove microorganisms from said skimmed milk fraction and thereby obtain a partly sterilized skimmed milk fraction; and
- a membranefiltration installation (c6, d6) adapted to standardize said partly sterilized skimmed milk fraction.

In another embodiment, said processing plant comprises:
- optionally, a balance tank for raw milk (c1,d1);
- optionally, a heating device (c2,d2) preferably adapted to heat raw milk to a temperature in the range 50-62 °C;
- optionally, a bactofuge (c3,d3) adapted to remove microorganisms from raw milk;
- a separator (c4, d4) adapted to separate raw milk into a cream fraction and a skimmed milk fraction; or a bactofuge-separator, wherein said bactofuge-separator is adapted to separate raw milk into a cream fraction, skimmed milk fraction and microorganism fraction;
- a microfiltration installation (c5, d5), wherein the microfiltration installation is adapted to remove microorganisms from said skimmed milk fraction and thereby obtain a partly sterilized skimmed milk fraction;
- a membranefiltration installation (c6, d6) adapted to standardize said partly sterilized skimmed milk fraction;
- optionally, a balance tank for cream fraction (c7,d7);
- a balance tank for processed milk (c8,d8), wherein said balance tank for processed milk is adapted to balance or equalize any pressure or flow changes that may arise during preceding processing steps;
- optionally, a homogenization device (c9,d9); and
- a pasteurization device (c10,d10), wherein the pasteurization device is adapted to reduce the number of viable pathogens in accordance with regulatory provisions.

In one preferred embodiment:
- the balance tank for raw milk (c1,d1) is in fluid communication with the heating device (c2,d2);
- the heating device (c2,d2) is in fluid communication with the bactofuge (c3,d3) or bactofuge-separator;
- in case of a bactofuge, the bactofuge is in fluid communication with the separator (c4, d4) and said separator (c4, d4) is in fluid communication with the microfiltration installation (c5, d5);
- in case of a bactofuge-separator, the bactofuge-separator is in fluid communication with the microfiltration installation (c5, d5);
- the microfiltration installation (c5, d5) is in fluid communication with the membranefiltration installation (c6, d6);
- the membranefiltration installation (c6, d6) may switch between being in fluid communication with the balance tank for raw milk (c1,d1) and being in fluid communication with the balance tank for processed milk (c8,d8);
- the balance tank for processed milk (c8,d8) is in fluid communication with the homogenization device (c9,d9);
- the homogenization device (c9,d9) is in fluid communication with the pasteurization device (c10,d10); and/or
- the pasteurization device (c10,d10) may switch between being in fluid communication with cooling device or being in fluid communication with the balance tank for processed milk (c8,d8).

In one embodiment, the bactofuge (c3,d3) is in fluid communication with the skimmed milk fraction containing pipe exiting from the separator (c4) and in fluid communication with the separator (c4). Thus, there is a flow of bactofugate into the skimmed milk fraction containing pipe exiting from the separator (c4). This embodiment is illustrated in figure 1c.

In another embodiment, the bactofuge (c3,d3) is in fluid communication with a waste container and in fluid communication with the separator (c4). Thus, there is a flow of bactofugate into the waste container. This embodiment is illustrated in figure 1d.

In one embodiment, said microfiltration installation (c5, d5) or said membrane filtration installation (c6, d6) may switch between being in fluid communication with said balance tank for raw milk (c1,d1) or said balance tank for processed milk (c8,d8) depending on operating conditions such as e.g. whether the content of the balance tank for processed milk (c8, d8) has reached a critical level.

In another embodiment, the outlet of the pasteurization device (c10,d10) may switch between being in fluid communication with said balance tank for processed milk (c8,d8) or the cooling device depending on operating conditions such as e.g. whether the product of the pasteurization device has been pasteurized according to government requirements.

In another embodiment, the outlet of the pasteurization device (c10,d10) may switch between being in fluid communication with said balance tank for processed milk (c8, d8) or the packaging section depending on operating conditions such as e.g. whether the product of the pasteurization device has been pasteurized according to government standards.

In one embodiment, the outlet for cream phase of said separator (c4) or bactofuge-separator may switch between being in fluid communication with said balance tank for raw milk (c1) or being in fluid communication with said balance tank for cream fraction (c7) depending on operating conditions such as e.g. whether the content of the balance tank for processed milk (c8, d8) has reached a critical level.

In another embodiment, the milk processing plant is operated in

### "production mode"

- said microfiltration installation (c5, d5) or said membrane filtration installation (c6, d6) is in fluid communication with said balance tank for processed milk (c8,d8); and
- outlet of the pasteurization device (c10,d10) is in fluid communication with said cooling device or said packaging section or said cheese production process line for producing cheese; or

### "maintainance mode"

- said microfiltration installation (c5, d5) or said membranefiltration installation (c6, d6) is in fluid communication with said balance tank for raw milk (c1,d1); and
- the outlet of the pasteurization device (c10,d10) is in fluid communication with said balance tank for processed milk (c8,d8).

In one embodiment, said processing plant is adapted so that it is possible to change between "production mode" and "maintainance mode".

Said "production mode" meaning that the process plant is producing products efficiently and in accordance with government requirements.

Said "maintainance mode" meaning that the process plant needs some kind of maintainance which may be caused by insufficient efficiency and/or production of products that is not in accordance with government requirements.

The heating device (c2,d2) may comprise one or more of the heating devices mentioned herein.

The bactofuge (c3,d3) may comprise one or more of the bactofuges mentioned herein. The bactofuge-separator may comprise one or more of the bactofuge-separators mentioned herein.

The separator (c4, d4) may comprise one or more of the separators mentioned herein.

The microfiltration installation (c5, d5) may comprise one or more of the microfiltration installations mentioned herein.

The membranefiltration installation (c6, d6) may comprise one or more of the membranefiltration installations mentioned herein.

The balance tank for cream fraction is preferably adapted to balance or equalize any pressure or flow changes that may arise during preceding processing steps.

The homogenization device (c9,d9) may comprise one or more of the homogenization devices mentioned herein.

The pasteurization device (c10,d10) may comprise one or more of the pasteurization devices mentioned herein.

The cooling device may comprise any device suitable to cool the pasteurized milk product to a temperature in the range 0-10 °C, preferably a heat exchanger such as a plate or tube heat exchanger.

The packaging section will typically contain a commercially available packaging or filling system.

Although the foregoing invention has been described in some detail by way of illustration and example for purposes of clarity of understanding, it will be readily apparent to those of ordinary skill in the art in light of the teachings of this invention that certain changes and modifications may be made thereto without departing from the scope of the appended claims.

## Claims

1. Method for producing milk, said method comprising the following steps:
a) providing raw milk;
b) subjecting the raw milk to treatment on a bactofuge (c3, d3) and thereby physically separating microorganisms from the raw milk;
c) separating the raw milk of step b) into a cream fraction and a skimmed milk fraction (c4,d4);
d) subjecting the skimmed milk fraction to microfiltration (c5,d5) adapted to remove microorganisms and thereby obtain a partly sterilized skimmed milk fraction;
e) optionally, subjecting the partly sterilized skimmed milk fraction to membrane filtration (c6,d6) adapted to standardize said partly sterilized skimmed milk fraction;
f) transporting the product of step d) or e) to a balance tank for processed milk (c8,d8), wherein said balance tank for processed milk is adapted to balance or equalize any pressure or flow changes that may arise during the preceding processing steps; and
g) subjecting the product obtained by the preceding steps to pasteurization (c10,d10) in order to obtain pasteurized milk;
wherein
- a microfiltration retentate (c5, d5) of step d) is mixed with the raw milk; or a bactofugate of step b) is mixed with the skimmed milk fraction of step c);
- step g) involves subjecting the product to a temperature in the range 65 °C to 80 °C; and
- the method does not include a step prior to step g) involving temperature treatment of the product at temperatures ≥ 65°C.

2. Method according to claim 1, wherein the microfiltration in step d) is performed using a filter having a pore size in the range 0.5-2.0 micron.

3. Method according to claim 1, wherein step e) is mandatory

4. Method according to claim 3, wherein the membrane filtration of step e) is selected from reverse osmosis (RO), nanofiltration (NF), ultrafiltration (UF) or any combination thereof.

5. Method according to claim 1, wherein the method does not include a step after step g) involving temperature treatment of the product at temperatures ≥ 80°C.

6. Method according to claim 1, wherein the method does not include a step after step g) involving temperature treatment of the product at temperatures ≥ 90°C.

7. Method according to claim 1, wherein the raw milk is heated to a temperature in the range 50-62 °C (c2,d2) prior to step b).

8. Method according to claim 1, wherein step c) involves subjecting the raw milk to treatment on a separator (c4,d4).

9. Method according to claim 1, wherein standardization in respect of casein content, total protein content, lactose content, mineral content, minerals : protein ratio, lactose : protein ratio and/or water content is achieved by step e).

10. Method according to claim 1, wherein the product of step f) is mixed with the cream fraction at a predetermined ratio in order to obtain fat standardized milk.

11. Method according to claim 10, wherein the fat standardized milk is subjected to homogenization (c9,d9) prior to pasteurization.

12. Method according to claim 1, wherein said milk is skimmed milk, cream and/or any mixture thereof.

## Patentansprüche

1. Verfahren zur Herstellung von Milch, welches Verfahren die folgenden Schritte umfasst:
a) Bereitstellen von Rohmilch;
b) Unterziehen der Rohmilch einer Behandlung auf einer Bactofuge (c3, d3) und dadurch physikalisches Abtrennen von Mikroorganismen von der Rohmilch;
c) Auftrennen der Rohmilch des Schritts b) in eine Rahmfraktion und eine Magermilchfraktion (c4,d4);
d) Unterziehen der Magermilchfraktion einer Mikrofiltration (c5,d5), welche dazu angepasst ist, Mikroorganismen zu entfernen, und dadurch eine teilweise sterilisierte Magermilchfraktion zu erhalten;
e) ggf. Unterziehen der teilweise sterilisierten Magermilchfraktion einer Membranfiltration (c6,d6), welche für die Standardisierung der teilweise sterilisierten Magermilchfraktion angepasst ist;
f) Befördern des Produkts des Schritts d) oder e) in einen Ausgleichsbehälter für verarbeitete Milch (c8,d8), wobei der Ausgleichsbehälter für verarbeitete Milch für das Ausgleichen oder Abgleichen jeglicher Druck- oder Strömungsänderungen, die während der vorhergehenden Behandlungsschritte entstehen könnten, angepasst ist; und
g) Unterziehen des durch die vorhergehenden Schritte erhaltenen Produkts einer Pasteurisierung (c10,d10) zum Erhalten pasteurisierter Milch;
wobei
- ein Mikrofiltrationsretentat (c5, d5) des Schritts d) mit der Rohmilch vermischt wird; oder ein Bactofugat des Schritts b) mit der Magermilchfraktion des Schritts c) vermischt wird;
- Schritt g) das Unterziehen des Produkts einer Temperatur im Bereich von 65º C bis 80º C umfasst; und
- das Verfahren keinen Schritt vor Schritt g), umfassend Temperaturbehandlung des Produkts bei Temperaturen ≥ 65º C, enthält.

2. Verfahren nach Anspruch 1, wobei die Mikrofiltration im Schritt d) unter Anwendung eines eine Porengröße im Bereich von 0,5-2,0 Mikrometern aufweisenden Filters durchgeführt wird.

3. Verfahren nach Anspruch 1, wobei der Schritt e) zwingend ist.

4. Verfahren nach Anspruch 3, wobei die Membranfiltration des Schritts e) aus Umkehrosmose (RO), Nanofiltration (NF), Ultrafiltration (UF) oder jeglicher Kombination davon ausgewählt wird.

5. Verfahren nach Anspruch 1, wobei das Verfahren keinen Schritt nach Schritt g), umfassend Temperaturbehandlung des Produkts bei Temperaturen ≥ 80 ºC, enthält.

6. Verfahren nach Anspruch 1, wobei das Verfahren keinen Schritt nach Schritt g), umfassend Temperaturbehandlung des Produkts bei Temperaturen ≥ 90º C, enthält.

7. Verfahren nach Anspruch 1, wobei die Rohmilch auf eine Temperatur im Bereich 50-62° C (c2,d2) vor Schritt b) erhitzt wird.

8. Verfahren nach Anspruch 1, wobei der Schritt c) das Unterziehen der Rohmilch einer Behandlung auf einem Separator (c4,d4) umfasst.

9. Verfahren nach Anspruch 1, wobei die Standardisierung in Bezug auf den Kaseingehalt, Gesamtproteingehalt, Laktosegehalt, Mineralgehalt, das Verhältnis von Mineralen zu Protein, Verhältnis von Laktose zu Protein und/oder Wassergehalt durch den Schritt e) erzielt wird.

10. Verfahren nach Anspruch 1, wobei das Produkt des Schritts f) zum Erhalten fettstandardisierter Milch mit der Rahmfraktion in einem vorbestimmten Verhältnis vermischt wird.

11. Verfahren nach Anspruch 10, wobei die fettstandardisierte Milch vor Pasteurisierung einer Homogenisierung (c9,d9) unterzogen wird.

12. Verfahren nach Anspruch 1, wobei die Milch Magermilch, Rahm und/oder jegliche Mischung davon ist.

## Revendications

1. Procédé pour la production du lait, comprenant les étapes suivantes de :
a) la fourniture de lait cru;
b) la soumission du lait cru à un traitement sur un bactofuge (c3, d3) et ainsi la séparation physique des micro-organismes du lait cru;
c) la séparation du lait cru de l'étape b) en une fraction de crème et une fraction de lait écrémé (c4,d4);
d) la soumission de la fraction de lait écrémé à une microfiltration (c5, d5) adaptée pour éliminer les microorganismes et ainsi obtenir une fraction de lait écrémé stérilisé en partie;
e) éventuellement, la soumission de la fraction de lait écrémé stérilisé en partie à une filtration sur membrane (c6, d6) adaptée pour normaliser ladite fraction de lait écrémé stérilisé en partie;
f) le transport du produit de l'étape d) ou e) à un réservoir d'équilibre pour du lait transformé (c8,d8), ledit réservoir d'équilibre pour du lait transformé étant adapté de manière à équilibrer ou égaliser toute pression ou tous changements qui peuvent survenir au cours des étapes de traitement précédentes; et
g) la soumission du produit obtenu par les étapes précédentes de pasteurisation (c10,d10) afin d'obtenir un lait pasteurisé;
dans lequel
- un rétentat de microfiltration (c5, d5) de l'étape d) est mélangé avec le lait cru; ou un bactofugat de l'étape b) est mélangé avec la fraction de lait écrémé de l'étape c);
- l'étape g) comprend la soumission du produit à une température comprise entre 65ºC et 80ºC; et
- le procédé ne comprend pas une étape avant l'étape g) comprenant un traitement de température du produit à des températures ≥ 65ºC.

2. Procédé selon la revendication 1, dans lequel la microfiltration dans l'étape d) est effectuée en utilisant un filtre ayant une taille de pores dans la gamme de 0.5-2.0 micron.

3. Procédé selon la revendication 1, dans lequel l'étape e) est obligatoire.

4. Procédé selon la revendication 3, dans lequel la filtration sur membrane de l'étape e) est choisie parmi l'osmose inverse (RO), la nanofiltration (NF), l'ultrafiltration (UF), ou toute combinaison de ceux-ci.

5. Procédé selon la revendication 1, dans lequel le procédé ne comprend pas une étape après l'étape g) comprenant un traitement de température du produit à des températures ≥ 80ºC.

6. Procédé selon la revendication 1, dans lequel le procédé ne comprend pas une étape après l'étape g) comprenant un traitement de température du produit à des températures ≥ 90ºC.

7. Procédé selon la revendication 1, dans lequel le lait cru est chauffé à une température comprise entre 50-62 °C (c2,d2) avant l'étape b).

8. Procédé selon la revendication 1, dans lequel l'étape c) comprend une soumission du lait cru à un traitement sur un séparateur (c4,d4).

9. Procédé selon la revendication 1, dans lequel la normalisation en ce qui concerne la teneur en caséine, la teneur totale en protéines, la teneur en lactose, la teneur en minéraux, les minéraux: le rapport de protéine, lactose: taux de protéines et/ou la teneur en eau est obtenue par l'étape e).

10. Procédé selon la revendication 1, dans lequel le produit de l'étape f) est mélangé avec la fraction de crème dans un rapport prédéterminé afin d'obtenir de la matière grasse de lait standardisé.

11. Procédé selon la revendication 10, dans lequel la matière grasse de lait standardisé est soumise à une homogénéisation (c9, d9) avant la pasteurisation.

12. Procédé selon la revendication 1, dans lequel ledit lait est du lait écrémé, de la crème et/ou tout mélange de ceux-ci.
